# EUROPEAN PATENT APPLICATION

(11) **EP 4 711 310 A1**
(43) Date of publication of application: **18.03.2026**
(21) Application number: 25766862.4
(22) Date of filing: 09.06.2025
(51) Int. Cl.: B65G 27/04, B65G 27/16, B65G 27/28, B65G 27/34

(54) **VECTOR VIBRATION FEEDER**

(30) Priority: 23.07.2024 CN 202410990903
(71) Applicant: Nanjing University, Nanjing, Jiangsu 210023 (CN); Nanjing Cuh Science & Technology Co., Ltd., Jiangning Nanjing, Jiangsu 211135 (CN)
(72) Inventor: WANG, Shun, Nanjing, Jiangsu 211100 (CN); LU, Binghan, Nanjing, Jiangsu 211100 (CN); ZHANG, Yixin, Nanjing, Jiangsu 211100 (CN)
(74) Representative: Cleanthous, Marinos
(86) International application number: PCT/CN2025/099882
(87) International publication number: WO 2026/021016

(57) **Abstract**

A vector vibration feeder is provided, including: an inner vibration body and an outer vibration body. A plurality of elastic beams are connected between the inner vibration body and the outer vibration body. The plurality of elastic beams are radially distributed around a central axis of the inner vibration body. The plurality of elastic beams are distributed in a spacing manner in a direction of the central axis. The elastic beams are configured to: allow the inner vibration body and the outer vibration body to do a relative translation motion along the central axis and a relative rotation motion around the central axis, and jointly suppress a relative radial motion or pitch motion between the inner vibration body and the outer vibration body. The relative radial motion or pitch motion of the inner vibration body and the outer vibration body can be suppressed, thus improving stability of parts conveying.

## Description

### TECHNICAL FIELD

The present disclosure relates to the field of conveying of parts, and in particular, to a vector vibration feeder that transports parts in an approximately elliptical motion trajectory along a spiral transportation path under collaborative driving of two stimulation mechanisms in different directions.

### BACKGROUND

In a vibration feeder, Chinese invention patent application CN102530495A discloses a vibration part feeding apparatus, which is a composite vibration type bowl-shaped vector vibration feeder. With a purpose of flexibly controlling a motion inclination angle of a parts conveying component, different excitation mechanisms are used in conjunction with an elastic part to respectively control a translation motion of the parts conveying component in a vertical direction and a rotation motion around a central vertical axis of the parts conveying component.

However, this composite vibration type feeder can generate a rotation motion (hereinafter referred to as "pitch motion") around an axis in a horizontal direction, so that motion components of points on the parts conveying component in the vertical directions are inconsistent. As a result, the parts conveying speed is unstable.

### SUMMARY

The present disclosure aims to provide a vector vibration feeder with a jack fruit structure, to suppress a pitch motion of a parts conveying component and improve feeding stability.

To achieve the above objectives, the present disclosure uses the following technical solutions:

A vector vibration feeder is provided, including an inner vibration body and an outer vibration body. A plurality of elastic beams are connected between the inner vibration body and the outer vibration body. The plurality of elastic beams are radially distributed around the central axis of the inner vibration body, and the plurality of elastic beams are distributed in a spacing manner in a direction of the central axis. Equivalent stiffness of each elastic beam in a first direction is greater than equivalent stiffness of the elastic beam in a direction perpendicular to the first direction. The first direction is a radial direction along the central axis of the inner vibration body and passes through a connection point between the elastic beam and the outer vibration body. A center of mass of the inner vibration body and a center of mass of the outer vibration body are both located on the central axis. A first set of excitation mechanisms and a second set of excitation mechanisms that are configured to cause the inner vibration body and the outer vibration body to generate a relative translation motion along the central axis and a relative rotation motion around the central axis are further arranged between the inner vibration body and the outer vibration body.

Further, the plurality of elastic beams are configured to: allow the inner vibration body and the outer vibration body to do the relative translation motion along the central axis and the relative rotation motion around the central axis, and jointly suppress a relative radial motion or pitch motion between the inner vibration body and the outer vibration body.

Further, the first set of excitation mechanisms provide an excitation force in the direction of the central axis, and the second set of excitation mechanisms provide an excitation force in a rotation direction of the central axis.

Or, excitation forces provided by the first set of excitation mechanisms and the second set of excitation mechanisms are decomposed into component forces in the direction of the central axis and component forces around the rotation direction of the central axis.

Further, the vector vibration feeder further includes support bodies. The support bodies are arranged at positions that are under the elastic beams and are close to a node with a smallest amplitude of a vibration mode corresponding to a target working state of the entire vector vibration feeder. A quantity of connection points between the support bodies and the elastic beams is not less than three, and projections of the support bodies on a mounting plane are not on one straight line; and the support bodies are connected to the mounting plane.

Further, a quantity of the support bodies is not less than three, which are independent members or are connected into a whole.

Further, the support bodies are connected to the elastic beams directly or through elastic damping materials or wear-resistant materials.

Further, the support bodies are connected to the mounting plane directly or through elastic damping materials or wear-resistant materials.

Optionally, the support bodies are connected to the mounting plane through a base.

Further, the support bodies are connected to the base directly or through elastic damping materials or wear-resistant materials. Compared with the prior art, the present disclosure has the following beneficial effects:

In the present disclosure, the plurality of elastic beams are arranged between the inner vibration body and the outer vibration body. A force arm formed by vertical distances between the elastic beams along the central axis of the inner vibration body and the equivalent stiffness of the elastic beams in a radial direction of the central axis of the inner vibration body are used to cooperate with each other to jointly suppress the relative radial motion or pitch motion between the inner vibration body and the outer vibration body, thus improving consistency of motions of points on a parts conveying component and improving parts conveying stability. Meanwhile, the support bodies are arranged between the elastic beams and a ground or the base. The support bodies are supported at the positions that are close to the node of the vibration mode corresponding to the target working state of the entire vector vibration feeder, so that vibration transmitted to the ground can be reduced. In addition, vibration components in other states are absorbed while basically not affecting feeding vibration, thus further improving feeding stability.

### BRIEF DESCRIPTION OF THE DRAWINGS

FIG. 1 is an isometric sectional view of a vector vibration feeder according to Embodiment I of the present disclosure;
FIG. 2 is a front view of the vector vibration feeder shown in FIG. 1;
FIG. 3 is a side view of the vector vibration feeder shown in FIG. 1;
FIG. 4 is a top view of the vector vibration feeder shown in FIG. 1;
FIG. 5 is a sectional view of the vector vibration feeder shown in FIG. 1 along line A-A in FIG. 4;
FIG. 6 is a sectional view of the vector vibration feeder shown in FIG. 1 along line B-B in FIG. 4;
FIG. 7 is a sectional view of the vector vibration feeder shown in FIG. 1 along line E-E in FIG. 4;
FIG. 8 is a sectional view of the vector vibration feeder shown in FIG. 1 along line C-C in FIG. 2;
FIG. 9 is a sectional view of the vector vibration feeder shown in FIG. 1 along line D-D in FIG. 2;
FIG. 10 is an isometric view of a vector vibration feeder according to Embodiment II of the present disclosure;
FIG. 11 is an isometric sectional view of the vector vibration feeder shown in FIG. 10;;
FIG. 12 is a front view (a) and a side view (b) of the vector vibration feeder shown in FIG. 10;
FIG. 13 is a sectional view of the vector vibration feeder shown in FIG. 10 along line B-B in FIG. 12;
FIG. 14 is a front view of a simple dynamic model of a vector vibration feeder according to the present disclosure;
FIG. 15 is a top view of the simple model shown in FIG. 14;
FIG. 16 is an isometric sectional view of a vector vibration feeder according to Embodiment III of the present disclosure;
FIG. 17 is a front view (a) and a top view (b) of an inner vibration body and connected accessories of the vector vibration feeder shown in FIG. 16;
FIG. 18 is an isometric sectional view of a vector vibration feeder according to Embodiment VII of the present disclosure;
FIG. 19 is a front view (a), a top view (b), and a sectional view (c) along line E-E of the vector vibration feeder shown in FIG. 18;
FIG. 20 is an isometric sectional view of a vector vibration feeder according to Embodiment IX of the present disclosure;
FIG. 21 is a front view and a sectional view along line D-D of the vector vibration feeder shown in FIG. 20;
FIG. 22 is another schematic structural diagram of an elastic beam according to the present disclosure;
FIG. 23 is an isometric sectional view of a vector vibration feeder according to Embodiment X of the present disclosure;
FIG. 24 is an isometric sectional view of a vector vibration feeder according to Embodiment XI of the present disclosure; and
FIG. 25 is an isometric sectional view of a vector vibration feeder according to Embodiment XII of the present disclosure.

In the drawings: 10: parts conveying component; 20: inner vibration body; 21: first disk body; 22: first electromagnet armature; 23: second electromagnet armature; 24: column body; 30: outer vibration body; 31: second disk body; 32: first electromagnet; 33: second electromagnet; 34: barrel body; 40: elastic beam; 41: S-shaped elastic beam; 42: straight elastic beam; 43: first annular element; 44: second annular element; 50: support body; 60: mounting plane; and 70: base.

### DETAILED DESCRIPTION OF THE EMBODIMENTS

The present disclosure will be further described below in conjunction with the specific embodiments. The following embodiments are only configured to more clearly illustrate the technical solutions of the present disclosure, and cannot be configured to limit the scope of protection of the present disclosure.

### Embodiment I

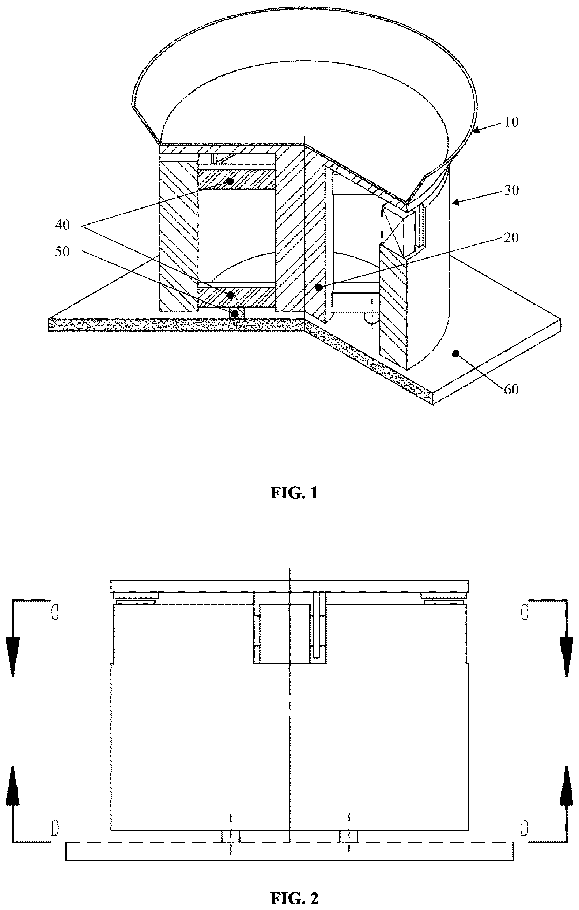

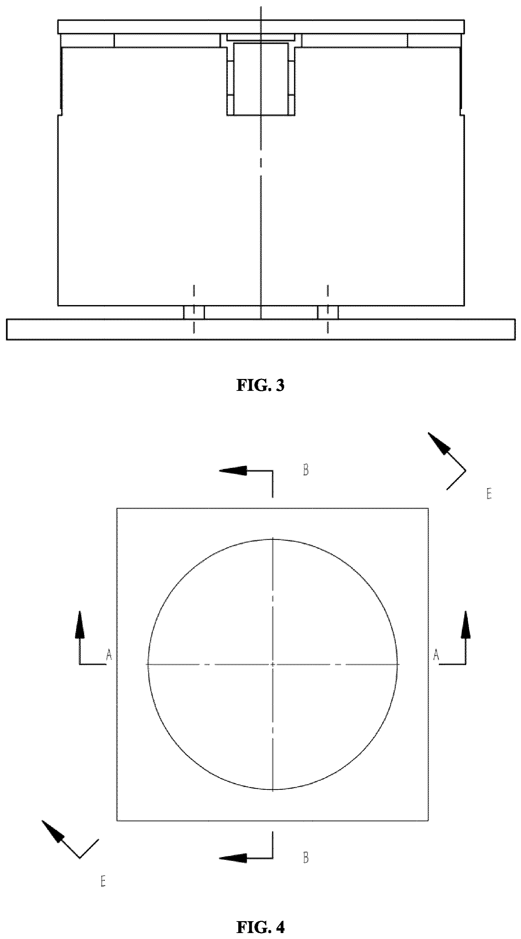

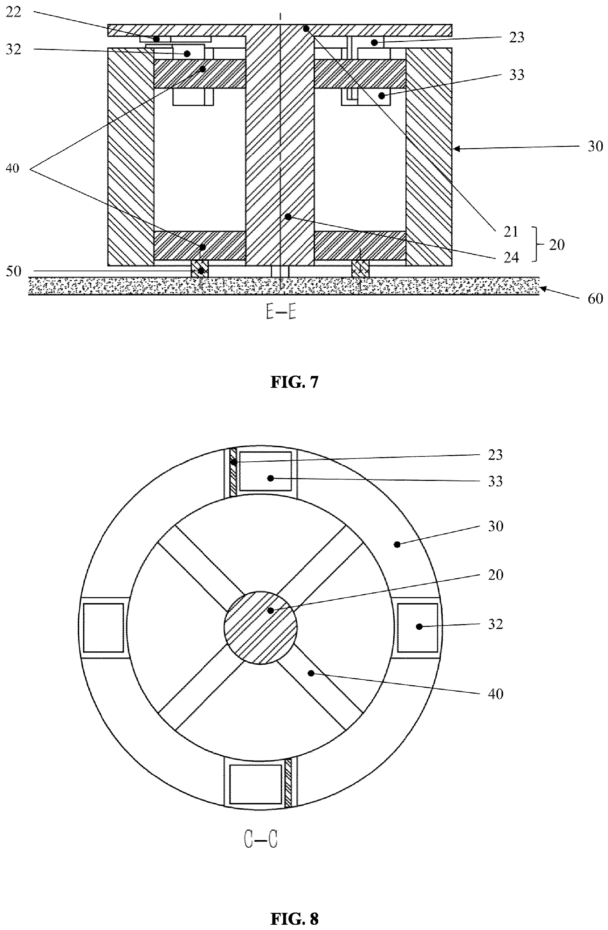

As shown in FIG. 1 to FIG. 9, a vector vibration feeder according to this embodiment of the present disclosure includes an inner vibration body 20, an outer vibration body 30, elastic beams 40 for connecting the inner vibration body 20 to the outer vibration body 30, and a first excitation mechanism and a second excitation mechanism that are arranged between the inner vibration body 20 and the outer vibration body 30 and are configured to provide excitation forces. The mounting plane 60 may be a ground or the like.

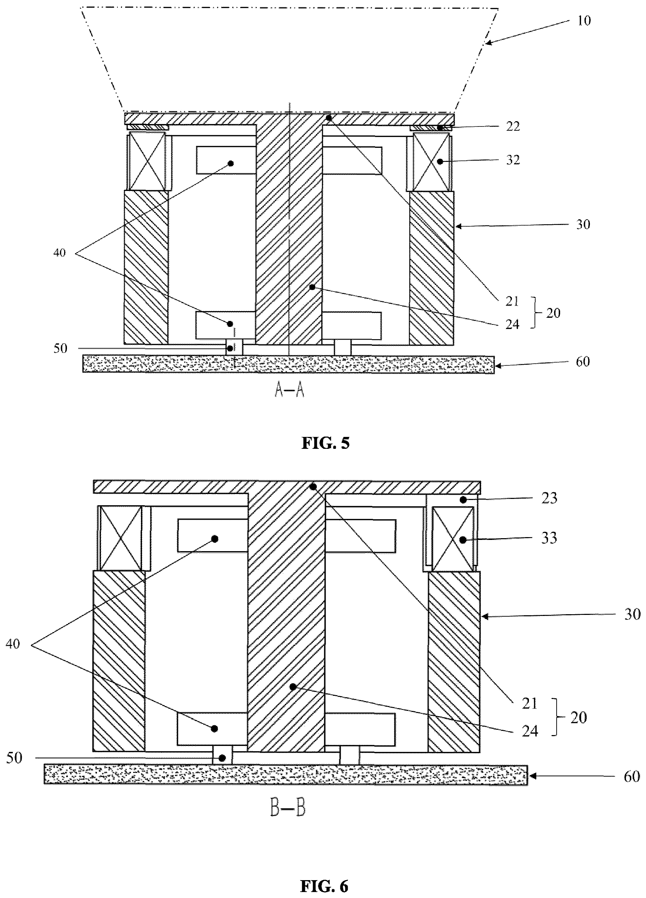

As shown in FIG. 5 to FIG. 7, the inner vibration body 20 is a T-shaped structure formed by combining a first disk body 21 with a column body 24 concentric with the first disk body 21, to ensure a sufficient size in a vertical direction. An upper surface of the first disk body 21 is configured to mount a parts conveying component 10.

In this embodiment, the first disk body 21 uses a circular structure, but is not limited to being circular. The first disk body can be in another shape. The outer vibration body 30 is a cylindrical structure. The column body 24 body of the inner vibration body 20 is located inside the outer vibration body 30 and on the same central axis as the outer vibration body 30.

The elastic beams 40 are connected between the column body 24 of the inner vibration body 20 and the outer vibration body 30. There are two groups of elastic beams 40, and planes on which the two groups of elastic beams 40 are located are parallel to each other. Each group includes four elastic beams 40 which are located on the same horizontal plane and all point to the central axis of the inner vibration body 20, that is, the elastic beams 40 are orthogonal to a central axis of the parts conveying component 10. The four elastic beams 40 are symmetrically distributed in a circumferential direction, to form a cross structure.

Specifically, four first elastic beam mounting portions are respectively arranged according to an equal spacing at each of a top and a bottom of the column body 24 of the inner vibration body 20 in the circumferential direction. The four first elastic beam mounting portions at the top are located on the same horizontal plane, and the four first elastic beam mounting portions at the bottom are also located on the same horizontal plane. Four second elastic beam mounting portions are respectively arranged according to an equal spacing at each of a top and a bottom of an inner wall of the outer vibration body 30 in the circumferential direction. The four second elastic beam mounting portions at the top are located on the same horizontal plane, and are in one-to-one correspondence to the four first elastic beam mounting portions at the top of the column body 24 of the inner vibration body 20. The four second elastic beam mounting portions at the bottom are also located on the same horizontal plane, and are in one-to-one correspondence to the four first elastic beam mounting portions at the bottom of the column body 24 of the inner vibration body 20.

One end of each elastic beam 40 is mounted at each first elastic beam mounting portion, and the other end of the elastic beam 40 is mounted at each second elastic beam mounting portion. Therefore, an upper group of elastic beams and a lower group of elastic beams are fixedly mounted between the inner vibration body 20 and the outer vibration body 30, and each group includes four elastic beams 40. A connecting line between two mounting points of each elastic beam 40 is on the same horizontal plane and points to the central axis of the inner vibration body 20. The four elastic beams located above and the four elastic beams located below form cross structures. A cross-sectional size of each elastic beam 40 is less than a length of the elastic beam 40.

Equivalent stiffness of each elastic beam 40 in a direction of the connecting line between the two mounting points is much greater than equivalent stiffness in a direction perpendicular to the connecting line between the two mounting points. This makes it difficult for the inner vibration body 20 and the outer vibration body 30 to undergo a relative translation motion in both the vertical direction and a horizontal direction.

A large vertical distance is provided between the upper and lower groups of elastic beams 40 to ensure that the inner vibration body 20 has a sufficient length for a force arm length in the vertical direction, and the force arm cooperates with the equivalent stiffness of the elastic beams 40 in the direction of the connecting line between the two mounting points to jointly constrain a radial or pitch motion or other ineffective motion modes of the inner vibration body 20 relative to the outer vibration body 30.

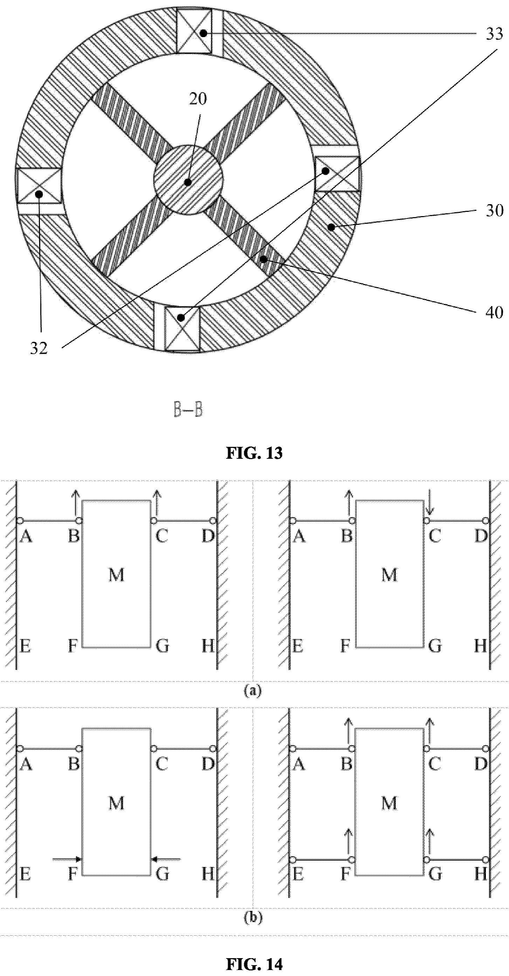

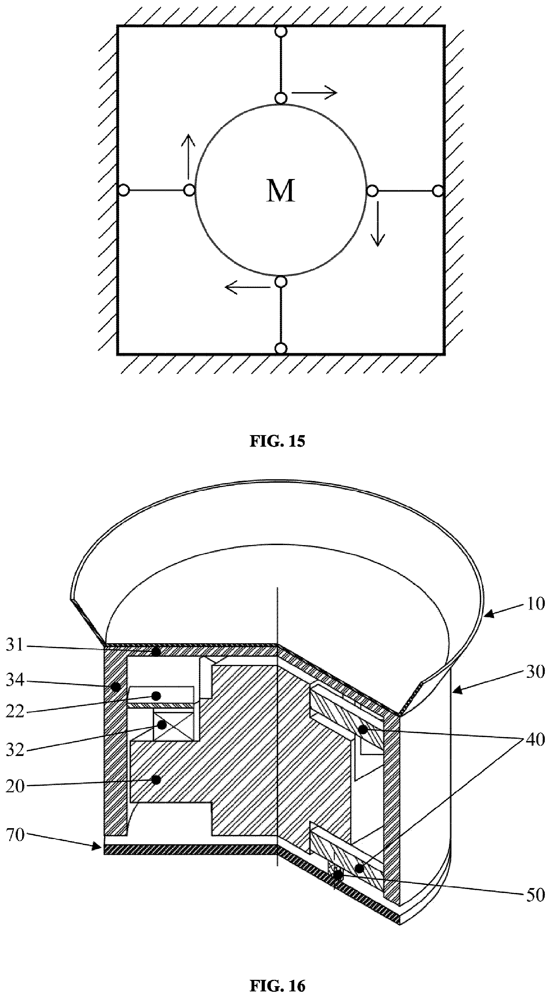

FIG. 14 and FIG. 15 show a simple dynamic model of the vector vibration feeder of the present disclosure, to describe a relative motion situation between the inner vibration body 20 and the outer vibration body 30. FIG. 14 (a) shows a side view direction. A rigid body M is used to simulate the inner vibration body 20 and the parts conveying component 10 mounted on the inner vibration body 20, and chain rods are used to simulate the elastic beams 40 for connecting the inner vibration body 20 to the outer vibration body 30. If there is only one group of elastic beams, as shown in FIG. 14 (a), point B and point C on the rigid body M can not only move in the same direction in the vertical direction (causing the rigid body M to translate), but also move in opposite directions (causing the rigid body M to flip), which is a defect consistent with that of a traditional structure. In this case, if a horizontal constraint is applied to F and G that are away from B and C by a vertical distance, for example, if additional elastic beam groups are mounted, as shown in FIG. 14 (b), a constraint moment can be formed at a midpoint of BC to suppress the occurrence of the pitch motion. In this way, the rigid body M can only do a translation motion in the vertical direction. FIG. 15 shows a top view direction. The rigid body M can only do a horizontal rotation motion.

The first set of excitation mechanisms and the second set of excitation mechanisms configured to apply, to the parts conveying component 10, excitation forces required by a translation motion in the vertical direction and a rotation motion in the horizontal direction are further arranged between the inner vibration body 20 and the outer vibration body 30.

The first set of excitation mechanisms and the second set of excitation mechanisms output excitation forces with the same frequency. This frequency is close to intrinsic frequencies of a vertical translation state and a horizontal rotation state (hereinafter referred to as a target working state) of the parts conveying component 10.

In an embodiment, as shown in FIG. 5 to FIG. 8, two first electromagnet armatures 22 and two second electromagnet armatures 23 are alternately arranged in an equal spacing manner at an outer edge of a lower surface of the first disk body 21 of the inner vibration body 20 in the circumferential direction. The first electromagnet armatures 22 are set to face the vertical direction, and the second electromagnet armatures 23 are set to face a horizontal tangent direction. First electromagnets 32 facing the same direction as the first electromagnet armatures 22, and second electromagnets 33 facing the same direction as the second electromagnet armatures 23 are respectively arranged at positions, which correspond to the first electromagnet armatures 22 and the second electromagnet armatures 23, at an upper part of the outer vibration body 30.

The first electromagnets 32 facing the vertical direction and the corresponding first electromagnet armatures 22 form the first set of excitation mechanisms. When the first electromagnets 32 are energized, an electromagnetic attraction force is periodically applied between the first electromagnets 32 and the first electromagnet armatures 22. This electromagnetic attraction force and a restoring force of the elastic beams 40 in the vertical direction cause the inner vibration body 20 and the parts conveying component 10 generate vertical translation vibration relative to the outer vibration body 30. The second electromagnets 33 facing the horizontal tangent direction and the corresponding second electromagnet armatures 23 form the second set of excitation mechanism. When the second electromagnets 33 are energized, an electromagnetic attraction force is periodically applied between the second electromagnets 33 and the second electromagnet armatures 23. This electromagnetic attraction force and a restoring force of the elastic beams 40 in the horizontal direction cause the inner vibration body 20 and the parts conveying component 10 generate horizontal rotation vibration relative to the outer vibration body 30. Due to the joint action in the two directions, a composite motion trajectory of a point on the parts conveying component 10 is approximately elliptical.

A resultant moment output by the first set of excitation mechanisms is zero, and a resultant force is in the vertical direction and passes through a center of mass of the parts conveying component 10. A resultant force output by the second set of excitation mechanism is zero, and a resultant moment is in the vertical direction and passes through a center of mass of the parts conveying component 10.

In another implementation, a first electromagnet armature 22 is arranged at a center of a lower surface of the column body 24 of the inner vibration body 20. The first electromagnet armature 22 is set to face the vertical direction. A first electromagnet 32 connected and mounted to the outer vibration body 30 is correspondingly mounted at a position that is below the first electromagnet armature 22 by a distance, and the first electromagnet 32 faces the same direction as the first electromagnet armature 22. A plurality of second electromagnet armatures 23 are arranged in an equal spacing manner at an outer edge of a lower surface of the first disk body 21 of the inner vibration body 20 in the circumferential direction. The second electromagnet armatures 23 are set to face a horizontal tangent direction. Second electromagnets 33 facing the same direction as the second electromagnet armatures 23 are respectively arranged at positions, which correspond to the second electromagnet armatures 23, at an upper part of the outer vibration body 30.

As shown in FIG. 5 to FIG. 7, support bodies 50 are further arranged between the mounting plane 60 and the elastic beams 40 to support the entire feeder. The support bodies 50 are made of an elastic damping material or a wear-resistant material.

Specifically, one support point is arranged below each of the four elastic beams 40 located below, and four identical support bodies 50 are arranged between the four support points and the mounting plane 60. The support point is located at a position close to a node with a smallest amplitude of a vibration mode corresponding to a target working state of the entire feeder. By the arrangement of the support bodies 50, main vibration of the feeder during operation cannot be transferred to the mounting plane 60 through the support bodies 50, thereby reducing vibration transferred to the mounting plane 60. Meanwhile, vibrations in other states can be absorbed by the support bodies 50, thus further improving the motion stability of the inner vibration body 20.

In the above implementation, the support bodies 50 are four independent members, but the support bodies 50 are not limited to being independent members, and they can also be connected into a whole.

The support bodies 50 can be connected to the elastic beams 40 directly or through elastic damping materials or wear-resistant materials.

Similarly, the support bodies 50 can also be connected to the mounting plane 60 directly or through elastic damping materials or wear-resistant materials.

### Embodiment II

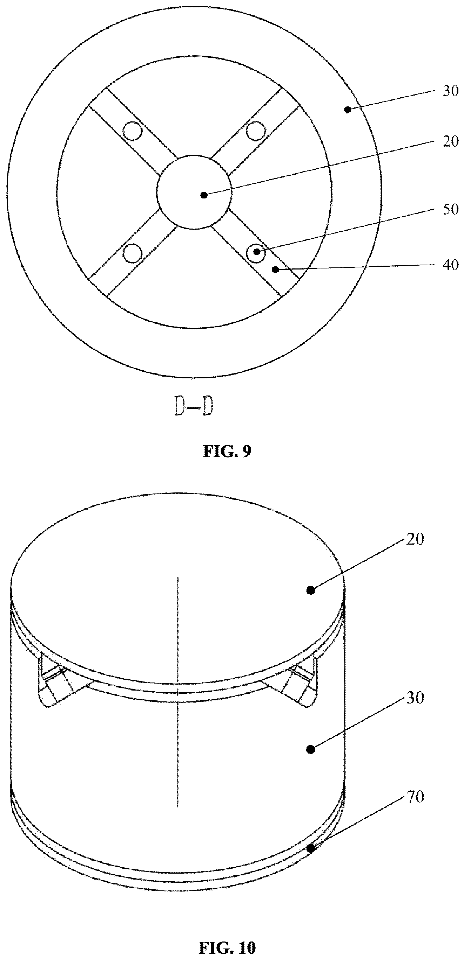

FIG. 10 to FIG. 13 show schematic structural diagrams of a vector vibration feeder according to Embodiment II of the present disclosure.

The structure of this embodiment is approximately the same as the structure of Embodiment I, and a difference is that arrangement directions of the first set of excitation mechanisms and the second set of excitation mechanisms are different. The first electromagnet 32 and the first electromagnet armature 22 are not set to face the vertical direction, but they are deflected by a first angle. The second electromagnet 33 and the second electromagnet armature 23 are not set to face the horizontal tangent direction either, but they are deflected by a second angle, so that the excitation forces provided by the first set of excitation mechanisms and the second set of excitation mechanisms can be decomposed into component forces in a direction of the central axis of the inner vibration body 20 and component forces around the rotation direction of the central axis of the inner vibration body 20.

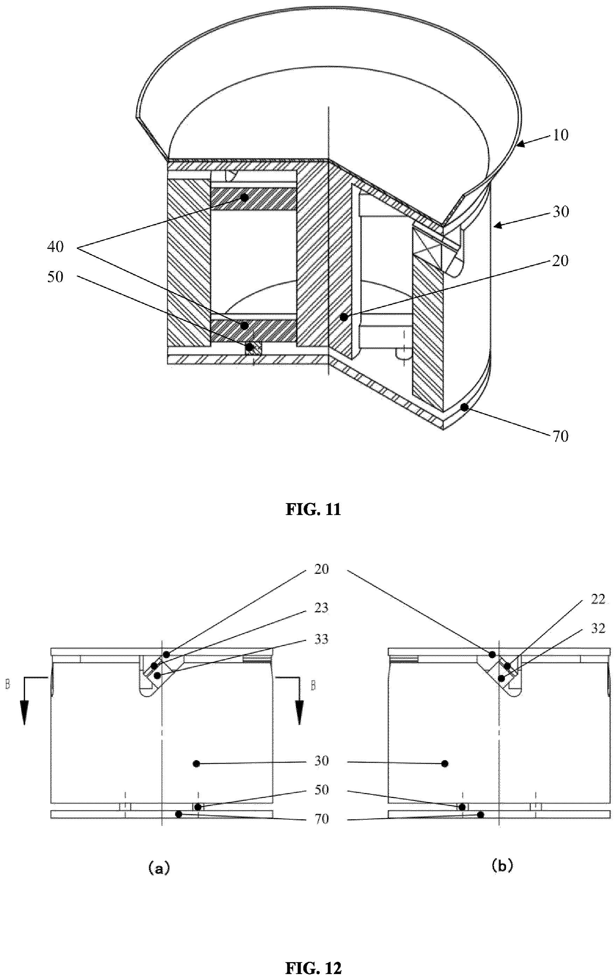

In a specific implementation, as shown in FIG. 12, two first electromagnet armatures 22 are distributed in a rotationally symmetrical manner with respect to the central axis of the inner vibration body 20 and are both set to face a direction that forms 45° with the vertical direction when viewed from a radial direction of the inner vibration body 20 to the central axis. Two second electromagnet armatures 23 are distributed in a rotationally symmetrical manner with respect to the central axis of the inner vibration body 20 and are both set to face a direction that forms -45° with the vertical direction when viewed from the radial direction of the inner vibration body 20 to the central axis. First electromagnets 32 facing the same direction as the first electromagnet armatures 22 and second electromagnets 33 facing the same direction as the second electromagnet armatures 23 are respectively arranged at positions, which correspond to the first electromagnet armatures 22 and the second electromagnet armatures 23, at an upper part of the outer vibration body 30.

In another implementation, the first electromagnets 32 and the first electromagnet armatures 22 are set to face the vertical direction, and the second electromagnets 33 and the second electromagnet armatures 23 are not set to the horizontal tangent direction, but they are deflected by a third angle. Specifically, a first electromagnet armature 22 is arranged at a center of a lower surface of the column body 24 of the inner vibration body 20. The first electromagnet armature 22 is set to face the vertical direction. A first electromagnet 32 connected and mounted to the outer vibration body 30 is correspondingly mounted at a position that is below the first electromagnet armature 22 by a distance, and the first electromagnet 32 faces the same direction as the first electromagnet armature 22. A plurality of second electromagnet armatures 23 are arranged in an equal spacing manner at an outer edge of a lower surface of the first disk body 21 in the circumferential direction. The second electromagnet armatures 23 are distributed in a rotationally symmetrical manner with respect to the central axis of the inner vibration body 20 and are all set to face a direction that forms the third angle such as -45° with the vertical direction when viewed from a radial direction of the inner vibration body 20 to the central axis. Second electromagnets 33 facing the same direction as the second electromagnet armatures 23 are respectively arranged at positions, which correspond to the second electromagnet armatures 23, at an upper part of the outer vibration body 30.

As shown in FIG. 11, in another implementation, the support bodies 50 are not directly placed on the mounting plane 60, but are mounted on a base 70. The base 70 is located between the outer vibration body 30 and the mounting plane 60. The support bodies 50 are supported between the bottommost group of elastic beams 40 and the base 70, and support points are located at a position close to a node with a smallest amplitude of a vibration mode corresponding to a target working state of the entire feeder. By the arrangement of the base, it is possible to effectively prevent tilting of the vibration feeder without affecting supporting and vibration reduction effects of the feeder.

The support bodies 50 can be connected to the base 70 directly or through elastic damping materials or wear-resistant materials.

### Embodiment III

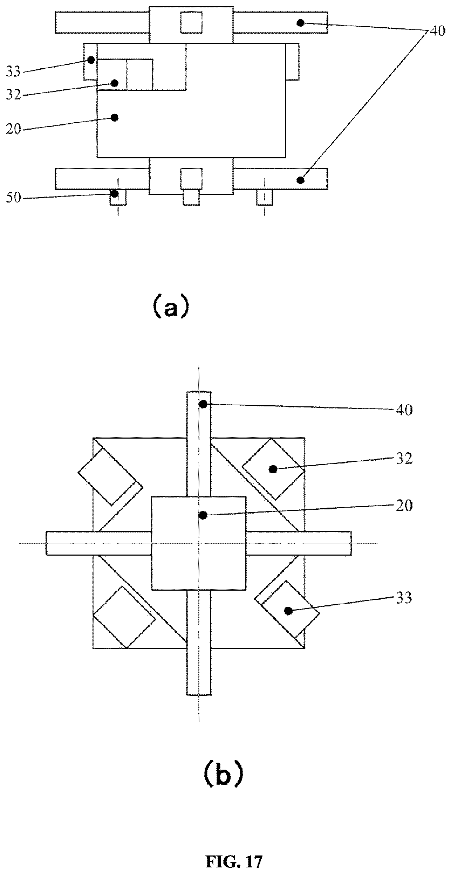

As shown in FIG. 16 and FIG. 17, a vector vibration feeder according to this embodiment of the present disclosure includes an outer vibration body 30, an inner vibration body 20 arranged between the outer vibration body 30 and a base 70, elastic beams 40 for connecting the inner vibration body 20 to the outer vibration body 30, a first set of excitation mechanisms and a second set of excitation mechanisms that are arranged between the inner vibration body 20 and the outer vibration body 30 and are configured to provide excitation forces, and support bodies 50 arranged between the base 70 and the elastic beams 40.

The outer vibration body 30 is a cylindrical structure formed by combining a second disk body 31 and a barrel body 34 concentric with the second disk body 31. An upper surface of the second disk body 31 is configured to mount a parts conveying component 10. In this embodiment, the second disk body 31 uses a circular structure, but is not limited to being circular.

The inner vibration body 20 is arranged inside the barrel body 34 of the outer vibration body 30 and is located on the same central axis as the barrel body 34. The elastic beams 40 are connected between the inner vibration body 20 and the barrel body 34 of the outer vibration body 30.

The inner vibration body 20 has a high mass. As shown in FIG. 16 and FIG. 17, two first electromagnets 32 and two second electromagnets 33 are alternately arranged in an equal spacing manner at an outer side edge of the inner vibration body 20 in a circumferential direction. The first electromagnets 32 are set to face a vertical direction, and the second electromagnets 33 are set to face a horizontal tangent direction. First electromagnet armatures 22 facing the same direction as the first electromagnets 32, and second electromagnet armatures 23 facing the same direction as the second electromagnets 33 are respectively arranged at positions, which correspond to the first electromagnets 32 and the second electromagnets 33, on an inner wall of the barrel body 34 of the outer vibration body 30.

Two groups of elastic beams 40 are fixedly mounted between the barrel body 34 of the outer vibration body 30 and the inner vibration body 20, and each group includes four elastic beams 40. A connecting line between of two mounting points of each elastic beam 40 is on the same horizontal plane and points to the central axis of the inner vibration body 20, thus forming a cross structure. Equivalent stiffness of each elastic beam 40 in a direction of the connecting line between the two mounting points is much greater than equivalent stiffness in a direction perpendicular to the connecting line between the two mounting points. The upper and lower groups of elastic beams 40 are parallel to each other and have a large vertical distance.

One support point is arranged below the four elastic beams 40 located below, and one support point is arranged at a position close to a node with a smallest amplitude of a vibration mode corresponding to a target working state of the entire feeder, to mount the support bodies 50.

The support bodies 50 are arranged between the elastic beams 40 and the base 70.

Certainly, the base 70 may not be provided, and the support bodies 50 are directly mounted on the mounting plane 60.

### Embodiment IV

The structure of this embodiment is approximately the same as the structure of Embodiment III, and a difference is that arrangement directions of the first set of excitation mechanisms and the second set of excitation mechanisms are different.

Specifically, two first electromagnets 32 are distributed in a rotationally symmetrical manner with respect to the central axis of the inner vibration body 20 and are both set to face a direction that forms 45° with the vertical direction when viewed from a radial direction of the inner vibration body 20 to the central axis. Two second electromagnets 33 are distributed in a rotationally symmetrical manner with respect to the central axis of the inner vibration body 20 and are both set to face a direction that forms -45° with the vertical direction when viewed from the radial direction of the inner vibration body 20 to the central axis. First electromagnet armatures 22 facing the same direction as the first electromagnets 32 and second electromagnet armatures 23 facing the same direction as the second electromagnets 33 are respectively arranged at positions, which correspond to the first electromagnets 32 and the second electromagnets 33, on an inner wall of the barrel body 34 of the outer vibration body 30.

### Embodiment V

The structure of this embodiment is approximately the same as the structure of Embodiment III and the structure of Embodiment IV, and a difference is that arrangement directions of the first set of excitation mechanisms and the second set of excitation mechanisms are different.

Specifically, a first electromagnet armature 22 is arranged at a center of a lower surface of the second disk body 31 of the outer vibration body 30, and the first electromagnet armature 22 is set to face the vertical direction. A first electromagnet 32 that corresponds to the first electromagnet armature 22 and faces the vertical direction is arranged at a center position of an upper part of the inner vibration body 20. A plurality of second electromagnets 33 are arranged in an equal spacing manner on an outer side of the inner vibration body 20 in the circumferential direction. The second electromagnets 33 are set to face a horizontal tangent direction. Second electromagnet armatures 23 facing the same direction as the second electromagnets 33 are respectively arranged at positions, which correspond to the second electromagnets 33, on an inner wall of the barrel body 34 of the outer vibration body 30.

In another specification, a first electromagnet armature 22 is arranged at a center of a lower surface of the second disk body 31 of the outer vibration body 30, and the first electromagnet armature 22 is set to face the vertical direction. A first electromagnet 32 that corresponds to the first electromagnet armature 22 and faces the vertical direction is arranged at a center position of an upper part of the inner vibration body 30. A plurality of second electromagnets 33 are arranged in an equal spacing manner on an outer side of the inner vibration body 20 in the circumferential direction. The second electromagnets 33 are distributed in a rotationally symmetrical manner with respect to the central axis of the inner vibration body 20 and are all set to face a direction that forms the third angle such as -45° with the vertical direction when viewed from a radial direction of the inner vibration body 20 to the central axis. Second electromagnet armatures 23 facing the same direction as the second electromagnets 33 are respectively arranged at positions, which correspond to the second electromagnets 33, on an inner wall of the barrel body 34 of the outer vibration body 30.

### Embodiment VI

The structure of this embodiment is approximately the same as the structure of Embodiment III and the structure of Embodiment IV, and a difference is that the outer vibration body 30 is only composed of a barrel body 34. A top end of the barrel body 34 is directly connected to a parts conveying component 10. The first set of excitation mechanisms and the second set of excitation mechanisms are arranged in the same manner as that in Embodiment III or Embodiment IV.

### Embodiment VII

In the above embodiments, the base 70 is connected to the bottommost group of elastic beams 40 among the elastic beams 40 through the support bodies 50, but the base 70 can also be connected to another group of elastic beams 40 other than the bottommost group through the support bodies 50, for example, to a group of elastic beams 40 located above.

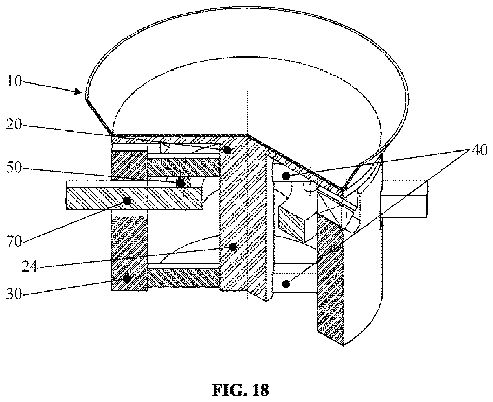

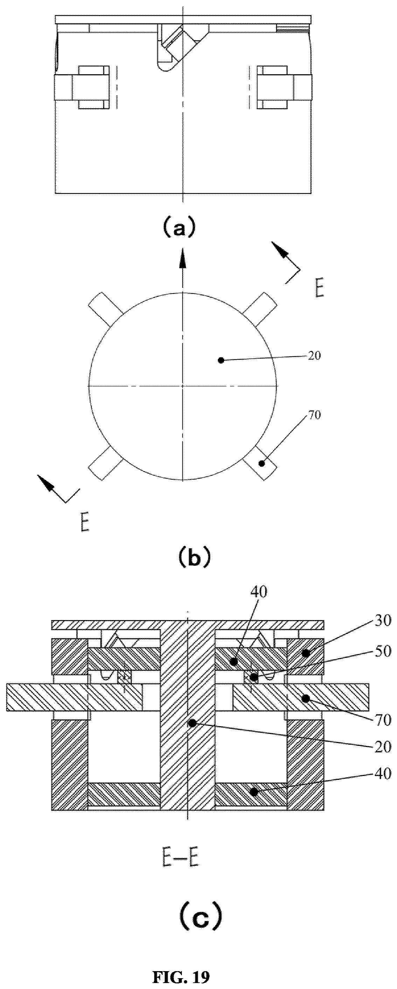

FIG. 18 and FIG. 19 show schematic structural diagrams of a vector vibration feeder according to Embodiment VII of the present disclosure. This embodiment is similar to Embodiment II. A difference is that the support points for mounting the support bodies 50 are arranged below the four elastic beams 40 located below. The support points of the support bodies 50 in this embodiment are arranged below the four elastic beams 40 located above and are close to a node with a smallest amplitude of a vibration mode corresponding to a target working state of the entire feeder. Correspondingly the base 70 is not located below the outer vibration body 30, but is located below the four elastic beams 40 located above.

Specifically, as shown in FIG. 18 and FIG. 19, the base 70 is composed of a central plate and a plurality of extension rods that are connected to an outer side wall of the central plate and are distributed in an annular array. A via hole is provided in a center of the central plate. The outer vibration body 30 is provided with a plurality of openings corresponding to the extension rods. The column body 24 of the inner vibration body 20 is arranged in the via hole of the base 70 in a penetrating manner. The extension rods of the base 70 are threaded out of the openings of the outer vibration body 30. The base 70 is connected to the elastic beams 40 above the base 70 through the support bodies 50, so that the base 70 is suspended on the outer vibration body 30 and is in no contact with the outer vibration body 30.

### Embodiment VIII

This embodiment is similar to Embodiment III. A difference is that the base 70 is not located below the inner vibration body 20 and the outer vibration body 30, but is located below the four elastic beams 40 located above.

Specifically, the base 70 is composed of a central plate and a plurality of extension rods that are connected to an outer side wall of the central plate and are distributed in an annular array. A via hole is provided in a center of the central plate. The barrel body 34 of the outer vibration body 30 is provided with a plurality of openings corresponding to the extension rods. The inner vibration body 20 is arranged in the via hole of the base 70 in a penetrating manner. The extension rods of the base 70 are threaded out of the openings of the barrel body 34 of the outer vibration body 30. The base 70 is connected to the elastic beams 40 above the base 70 through the support bodies 50, so that the base 70 is suspended on the barrel body 34 of the outer vibration body 30 and is in no contact with the barrel body 34 of the outer vibration body 30.

### Embodiment IX

In the above embodiments, two groups of elastic beams 40, an upper group and a lower group, are provided, which are parallel to each other, and each group includes four elastic beams that form a cross structure, but a quantity of the groups of elastic beams 40 can be greater than two, and the groups of elastic beams can be other symmetric structures, and are not limited to cross structures.

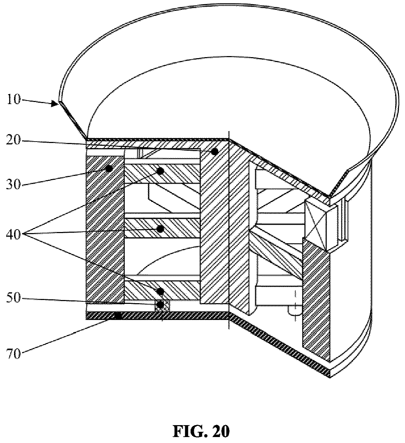

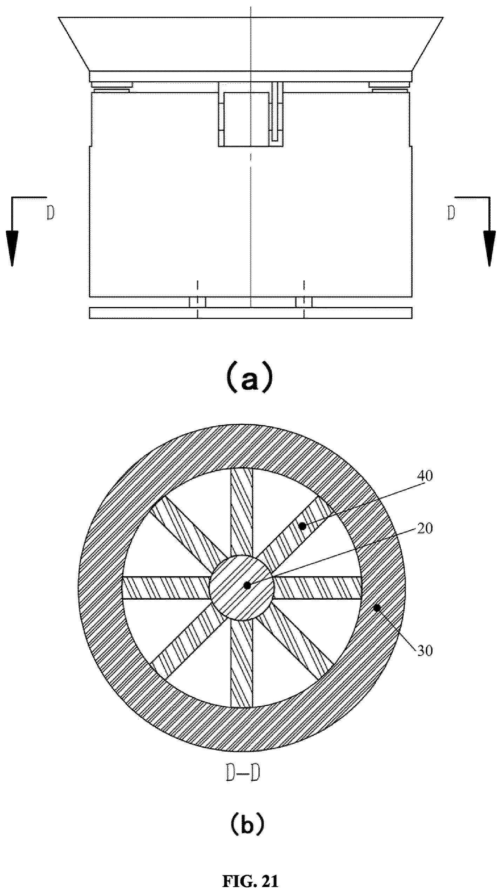

FIG. 20 and FIG. 21 show schematic structural diagrams of a vector vibration feeder according to Embodiment IX of the present disclosure. Specifically, three groups of elastic beams 40 are fixedly mounted between the inner vibration body 20 and the outer vibration body 30. Four elastic beams located above form a first group of elastic beams. Four elastic beams located below form a second group of elastic beams. Eight elastic beams located in the middle form a third group of elastic beams. A connecting line between of two mounting points of each elastic beam is on the same horizontal plane and points to the central axis of the inner vibration body 20. Equivalent stiffness of each elastic beam 40 in a direction of the connecting line between the two mounting points is much greater than equivalent stiffness in a direction perpendicular to the connecting line between the two mounting points. The three groups of elastic beams are parallel to each other, and a large vertical distance is provided between the first group of elastic beams and the second group of elastic beams.

One support point is arranged below each elastic beam in the second group of elastic beams located below, and one support point is arranged at a position close to a node with a smallest amplitude of a vibration mode corresponding to a target working state of the feeder, to mount the support bodies 50. One end of each support body 50 is mounted on each elastic beam of the second group of elastic beams, and the other end of the support body 50 is mounted on the base 70.

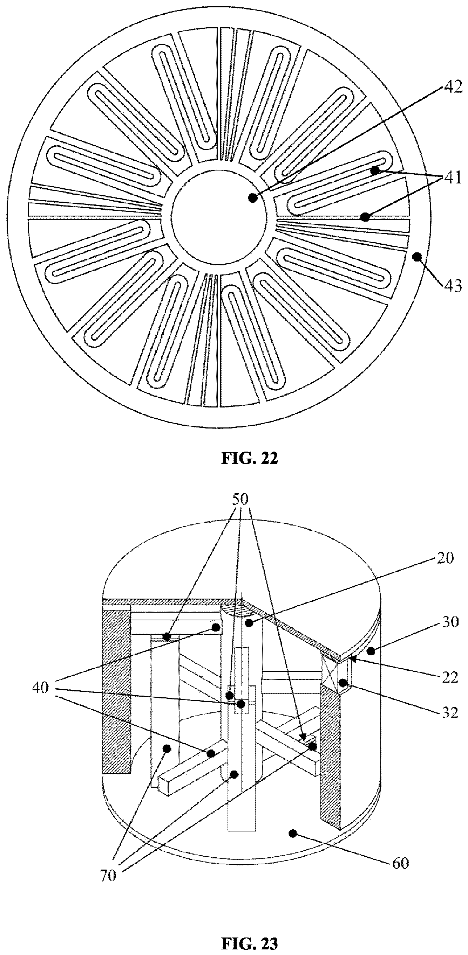

**In** the above embodiment, the elastic beams 40 use straight beam structures, but the elastic beams 40 are not limited to straight beams. The elastic beams can also be other structures. FIG. 22 shows a specially-shaped elastic beam structure. As shown in FIG. 22, each elastic beam 40 includes a plurality of S-shaped elastic beams 41 and a plurality of straight elastic beams 42. One end of each S-shaped elastic beam 41 is connected to a first annular element 43, and the other end of the S-shaped elastic beam 41 is connected to a second annular element 44. Two ends of the straight elastic beam 42 are also respectively connected to the first annular element 43 and the second annular element 44. The elastic beam 40 is connected to the outer vibration body 30 through the first annular element 43 and is connected to the inner vibration body 20 through the second annular element 44.

### Embodiment X

In the foregoing embodiment, two or more groups of elastic beams 40 are provided, but the elastic beams 40 may not be grouped or may use asymmetric structures.

As shown in FIG. 23, eight elastic beams 40 are connected between the inner vibration body 20 and the outer vibration body 30. The eight elastic beams 40 are radially distributed around the central axis of the inner vibration body 20, and the eight elastic beams 40 are distributed around the central axis of the inner vibration body 20 in a spacing manner. Equivalent stiffness of each elastic beam 40 in a direction of the connecting line between the two mounting points is greater than equivalent stiffness in a direction perpendicular to the connecting line between the two mounting points.

As shown in FIG. 23, looking down from top, support bodies 50 are arranged below the first, second, and eighth elastic beams 40 and are close to a node with a smallest amplitude of a vibration mode corresponding to a target working state of the entire feeder. The support bodies 50 are connected to a mounting plane 60 through a base 70. The base 70 is composed of three independent first support columns. The three first support columns pass through gaps between the elastic beams 40 and respectively extend to positions below the first, second, and eighth elastic beams 40. The first, second, and eighth elastic beams 40 are respectively connected to the three first support columns through the support bodies 50, and the three first support columns are connected to the mounting plane 60. The support bodies 50 can be connected to the elastic beams 40 directly or through elastic damping materials or wear-resistant materials. The support bodies 50 can also be connected to the base 70 directly or through elastic damping materials or wear-resistant materials.

A quantity of connection points between the support bodies 50 and the elastic beams 40 is not less than three, and projections of the support bodies on the mounting plane 60 are not on one straight line. Therefore, the support bodies 50 support the entire feeder structure at the support points for the elastic beams 40 that are not on the same plane and have projections not on the same straight line.

### Embodiment XI

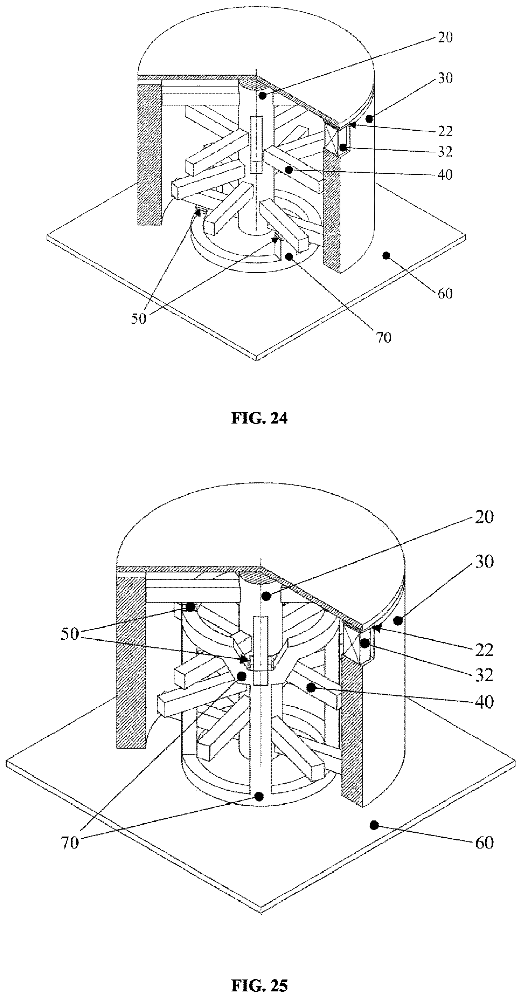

**As** shown in FIG. 24, this embodiment is similar to Embodiment X. The elastic beams 40 are also radially distributed around the central axis of the inner vibration body 20. However, the elastic beams 40 connect the inner vibration body 20 to the outer vibration body 30 in a manner of penetrating through the middle of the inner vibration body 20. The base 70 is mounted below the inner vibration body 20 and the outer vibration body 30. The base 70 is ringlike and includes three first support columns. The first support columns extend into a gap between the inner vibration body 20 and the outer vibration body 30, and are connected to the bottommost three elastic beams 40. The base 70 is fixed on the mounting plane 60.

### Embodiment XII

The base 70 can be mounted between the inner vibration body 20 and the outer vibration body 30 in addition to being mounted below the inner vibration body 20 and the outer vibration body 30.

As shown in FIG. 25, the base 70 is a two-layer structure with an upper layer and a lower layer. An upper part of the base 70 is a ringlike structure, which is located between the inner vibration body 20 and the outer vibration body 30 and below the topmost three elastic beams 40. The upper part of the base 70 is connected to the elastic beams 40 through the support bodies 50. A lower part of the base 70 is a ringlike structure and is mounted on the mounting plane 60. The upper and lower parts of the base 70 are connected by four second support columns, and the second support columns are configured to avoid the elastic beams 40.

By changing the structure of the base 70 and the structure of each support body 50, any elastic beam 40 can be used as a support point for the support body 50. By arranging the support points on the elastic beams close to a center of mass of the entire vibration feeder, performance of the feeder can be improved.

By the arrangement of the plurality of elastic beams, the present disclosure reduces an amplitude amplification factor of a pitch motion mode within a working frequency band while concentrating output energy of the excitation mechanisms in the target working state, thereby suppressing the relative radial or pitch motion of the feeder during operation. Furthermore, by arranging the support bodies on a target state node, vibration transferred to the ground is reduced, and vibration components of other states are absorbed without affecting feeding vibration, thus further suppressing a useless motion mode such as a pitch motion of the feeder during operation and improving feeding stability.

The above describes the embodiments of the present disclosure and is not intended to limit the present disclosure. Any modification, equivalent replacement, and improvement made within the spirit and scope of the present disclosure shall fall within the protection scope of the claims of the present disclosure to be approved.

## Claims

1. A vector vibration feeder, comprising an inner vibration body (20) and an outer vibration body (30), wherein the inner vibration body (20) is arranged inside the outer vibration body (30) and is located on the same central axis as the outer vibration body (30); a plurality of elastic beams (40) are connected between the inner vibration body (20) and the outer vibration body (30); the plurality of elastic beams (40) are radially distributed around the central axis of the inner vibration body (20), and the plurality of elastic beams (40) are distributed in a spacing manner in a direction of the central axis; equivalent stiffness of each elastic beam (40) in a first direction is greater than equivalent stiffness of the elastic beam in a direction perpendicular to the first direction; the first direction is a radial direction along the central axis of the inner vibration body (20) and passes through a connection point between the elastic beam (40) and the outer vibration body (30); a center of mass of the inner vibration body (20) and a center of mass of the outer vibration body (30) are both located on the central axis; and a first set of excitation mechanisms and a second set of excitation mechanisms that are configured to cause the inner vibration body (20) and the outer vibration body (30) to generate a relative translation motion along the central axis and a relative rotation motion around the central axis are further arranged between the inner vibration body (20) and the outer vibration body (30).

2. The vector vibration feeder according to claim 1, wherein the plurality of elastic beams (40) are configured to: allow the inner vibration body (20) and the outer vibration body (30) to do the relative translation motion along the central axis and the relative rotation motion around the central axis, and jointly suppress a relative radial motion or pitch motion between the inner vibration body (20) and the outer vibration body (30).

3. The vector vibration feeder according to claim 1, wherein the first set of excitation mechanisms provide an excitation force in the direction of the central axis, and the second set of excitation mechanisms provide an excitation force around a rotation direction of the central axis;
or, excitation forces provided by the first set of excitation mechanisms and the second set of excitation mechanisms are decomposed into component forces in the direction of the central axis and component forces around the rotation of the central axis.

4. The vector vibration feeder according to any one of claims 1 to 3, further comprising support bodies (50), wherein the support bodies (50) are arranged at positions that are under the elastic beams (40) and are close to a node with a smallest amplitude of a vibration mode corresponding to a target working state of the entire vector vibration feeder; a quantity of connection points between the support bodies (50) and the elastic beams (40) is not less than three, and projections of the support bodies on a mounting plane (60) are not on one straight line; and the support bodies (50) are connected to the mounting plane (60).

5. The vector vibration feeder according to claim 4, wherein a quantity of the support bodies (50) is not less than three, which are independent members or are connected into a whole.

6. The vector vibration feeder according to claim 4, wherein the support bodies (50) are connected to the elastic beams (40) directly or through elastic damping materials or wear-resistant materials.

7. The vector vibration feeder according to claim 4, wherein the support bodies (50) are connected to the mounting plane (60) directly or through elastic damping materials or wear-resistant materials.

8. The vector vibration feeder according to claim 4, wherein the support bodies (50) are connected to the mounting plane (60) through a base (70).

9. The vector vibration feeder according to claim 8, wherein the support bodies (50) are connected to the base (70) directly or through elastic damping materials or wear-resistant materials.
